# EUROPEAN PATENT SPECIFICATION

(11) **EP 0 671 315 B1**
(45) Date of publication and mention of the grant of the patent: **11.08.1999**
(21) Application number: 95301448.7
(22) Date of filing: 06.03.1995
(51) Int. Cl.: B62K 23/04, B62K 21/26

(54) **Nubbed grip for rotatable bicycle gear shifter**
Noppengriff für drehbaren Fahrradgangschalter
Poignée pourvue de tétons pour dispositif tournant de changement de vitesse

(30) Priority: 07.03.1994 US 207249; 09.08.1994 US 287721; 27.10.1994 US 330285
(43) Date of publication of application: 13.09.1995
(73) Proprietor: SRAM CORPORATION, Chicago, Illinois 60610 (US)
(72) Inventor: Larson, Michael W., Chicago, Illinois 60618 (US); Caron, Andrew J., Berwyn, Illinois 60402 (US); Cheever, John David, Chicago, Illinois 60614 (US); Laun, Tymme Andreas, Chicago, Illinois 60647 (US); Duston, Tyler D., Chicago, Illinois 60626 (US)
(74) Representative: Copp, David Christopher

(56) References cited:
- DE-C- 688 541
- DE-U- 9 317 875
- FR-A- 2 138 004
- GB-A- 122 270
- US-A- 4 308 762
- US-A- 4 895 044
- US-A- 4 900 291

## Description

The present invention relates in general to gear shifters, and more particularly to a handlebar-mounted rotatable gear shifter designed to ergonomically fit the joints and lands of a rider's hand.

### BACKGROUND OF THE INVENTION:

Hand-rotatable bicycle gear shifters have been developed as replacements for the older lever-actuated shifters, especially for use in conjunction with off-road or "mountain" bicycles. Hand-rotatable shift actuators are disclosed, for example, in U.S. Patent No. 4,900,291 issued February 13, 1990; U.S. Patent No. 4,938,733 issued July 3, 1990; U.S. Patent No. 5,102,372 issued April 7, 1992; and U.S. Patent No. 5,197,927 issued March 30, 1993. All of these are assigned to the assignee of this application. In each of the foregoing patents, a bicycle derailleur is actuated by a rotatable grip which is located on the handlebar of the bicycle inboard of the normal handgrip. Prior to this invention, the gripping surface of rotatable grips sold by the assignee of this application were typically formed of foam rubber or neoprene, were secured to an underlying rotatable member of the gear shifter assembly, and typically had a smooth outer surface.

U.S. Patent No. 4,895,044 showing the features of the preamble of each of the claims 1, 6, 9 and 15 describes a grip for a bicycle handle, the grip comprising a rotating member an exterior surface of which is generally formed as a solid of rotation. The exterior surface has a plurality of axially elongated zones angularly spaced apart from each other by ribs, each zone having a plurality of knurls. The ribs and knurls are intended to improve the rider's hold on the grip.

The assignee has experimented with hand-rotatable grips with axially extending ribs where the grips were formed of a hard plastic material such as ABS; these grips were less than optimal in that they presented harsh sharp edges to the operator's hand. These edges were uncomfortable to the rider especially in those conditions involving uneven surfaces, as occasionally experienced on most roads but presenting an especially acute problem for off-the-road bicycle travel. Also, these prior rotatable grips of the assignee tended to become slippery when fouled by mud and the like, reducing the amount of torque capable of being applied by the rider. A need therefore exists for improved grips with optimum torque-transmission and antifouling features which are adapted to be incorporated into a hand-rotatable gear shifter.

### SUMMARY OF THE INVENTION

According to one aspect of the present invention, a hand-rotatable bicycle gear shifter is characterised by the features having of claim 1. A plurality of upstanding elastomeric nubs or features extends radially outwardly from the cylindrical surface to be spaced apart from each other in each of two directions that are tangential to the generally cylindrical surface. Each of these upstanding features has a sidewall which is formed at a substantial angle to the generally cylindrical surface. The upstanding features permit mud and other fouling matter to drop between them, thereby presenting a relatively clean and comfortable gripping surface to the rider. Further, when tangential pressure is applied by the hand to a sidewall of any upstanding feature, the sidewall is stretched in a radial outward direction, thereby allowing more torque to be applied by the hand to the upstanding feature.

According to an embodiment of the invention, the upstanding features are themselves formed on a plurality of upstanding longitudinal ribs. Each of the ribs has an end surface at a second radius which is substantially greater than the general radius of the cylindrical surface of the grip. It is preferred that from four to six such longitudinal ribs be formed as a portion of the grip, and more preferably, five such ribs, as spaced equidistantly around the periphery of the grip.

According to a further aspect of the invention defined by claim 6, the body of the shifter includes first and second portions, with the first portion being formed substantially as a cylinder and the second portion having a radius at one of its ends which is substantially greater than the radius of the first portion. Nubs are formed on the second or flange portion as well as on the cylindrical portion in order to increase frictional force and therefore the torque capable of being applied by the rider. This second or flange portion may for example take a frustoconical shape.

The inventors have observed that as wrapped around a cylindrical shape, the hand naturally has several crooks and lands.
According to a further aspect of the invention, therefore, the rotatable gear shifter according to claim 9 disposes its groups of nubs and/or ribs such that a first of the ribs or nub groups is disposed adjacent the joint between the distal phalanx and the middle phalanx of the forefinger of a hand of the rider when gripping the grip, a second of the ribs or nub groups is disposed adjacent the joint between the middle phalanx and the proximal phalanx of the forefinger of that hand, and a third of the ribs or nub groups is disposed adjacent the joint between the proximal phalanx and the metacarpal phalanx of the forefinger. Preferably, a fourth of the ribs or nub groups is disposed adjacent the joint between the proximal phalanx and the metacarpal of the thumb of the rider's hand.

According to a further aspect of the invention defined by claim 15, the nubs have a ramped shape, preferably a "shark tooth" shape, and are arranged in longitudinal, spaced apart rows such that some of the nubs will have leading faces which face against one direction of rotation, while the rest of the nubs have leading faces which face against the other direction of rotation. These ramped features permit an efficient transmission of torque to the grip and to the rotatable member on which the grip is fitted, regardless of the direction in which the rider applies torque.

The present inventions provide technical advantages in that they offer a comfortable grip for the rider's hand which nonetheless maximizes the amount of torque which may be transmitted from the rider to the gear shifter even in muddy or other adverse conditions.

### BRIEF DESCRIPTION OF THE DRAWINGS

Other aspects of the invention and their advantages will be discerned from the following detailed description, in which like characters denote like parts, and in which:
FIGURE 1 is an isometric view of a portion of a bicycle handlebar on which is mounted a hand-rotatable gear shifter as incorporating a first embodiment of a grip according to the invention;
FIGURE 2 is an exploded view of the hand-rotatable gear shifter and associated handlebar grip shown in FIGURE 1;
FIGURE 3 is a detailed isometric view of the first embodiment of the grip;
FIGURE 4 is a part elevational, part sectional view of a cylindrical portion of the grip shown in FIGURE 3 as being grasped by the left hand of a rider;
FIGURES 5a and 5b are details showing deformation of ribs and nubs upon application of torque;
FIGURE 6 is an isometric view of a second embodiment of a grip according to the invention;
FIGURE 7 is an elevational view of the grip shown in FIGURE 6, as incorporated into a gear shifter assembly;
FIGURE 8 is an end-on elevational view of the hand-rotatable gear shifter assembly shown in FIGURE 7;
FIGURE 9 is an isometric view of a third embodiment of a grip according to the invention;
FIGURE 10 is an elevational view of the grip shown in FIGURE 9, as incorporated into a hand-rotatable gear shifter assembly;
FIGURE 11 is an end-on elevational view of the assembly shown in FIGURE 10;
FIGURE 12 is an isometric view of a third, "shark-tooth" embodiment of the invention;
FIGURE 13 is a side elevational view of the grip shown in FIGURE 12;
FIGURE 14 is an end-on elevational view of the grip shown in FIGURE 12;
FIGURE 15 is a radial sectional view taken substantially along line 15-15 of FIGURE 13; and
FIGURE 16 is a radial sectional view taken substantially along line 16-16 of FIGURE 13.

### DETAILED DESCRIPTION OF THE INVENTION

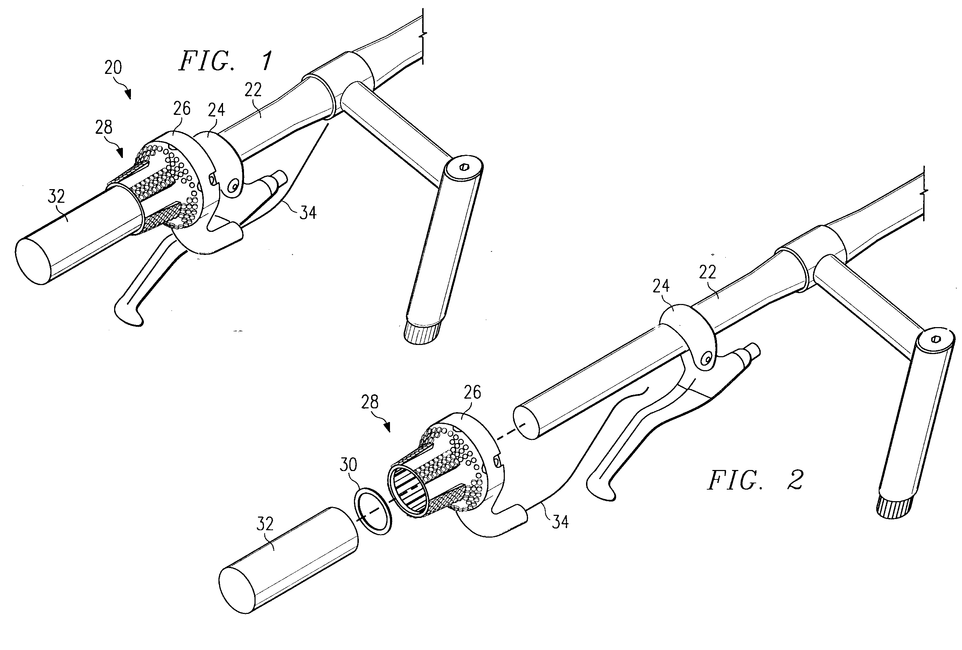

Referring first to FIGURES 1 and 2, a hand-rotatable gear shifter assembly is indicated generally at 20 as mounted on a handlebar 22 of a bicycle. As previously noted, the invention is especially suited for the shifting of derailleurs on off-the-road or "mountain" bikes, although it may be advantageously applied to any bicycle or other wheeled vehicle requiring the hand actuation of a cable-linked transmission between at least two gears. In order of assembly, in the illustrated embodiment a hand-applied caliper brake lever 24 is clamped to the handlebar 22 followed by the gear shifter assembly 20, which is assembled as a unit prior to its installation on the handlebar 22. A housing 26 of the assembly 20 is fixed in place with respect to the handlebar 22, while a grip indicated generally at 28 rotates about the handlebar axis. The grip 28 is carried by a cylindrical rotating member (not shown) which rotates on a corresponding coaxial mandrel (not shown) that is fixed with respect to handlebar 22. To complete the installation, a slip ring 30 is slipped over the handlebar 22, followed by an outboard nonrotatable handgrip 32.

The gear shifter assembly 20 is one terminus of a Bowden gear shifting cable. Conventionally, the Bowden cable includes a sheath or tube (not shown) in which a strong, flexible cable 34 is axially displaced toward or away from assembly 20 by rotating the grip 28. A front or rear derailleur (not shown) typically is the other terminus of the Bowden cable 34. The axial displacement of the cable 34 up or down its length will cause the derailleur to shift gears between adjacent sprockets or chainrings associated with the derailleur. For the purpose of appreciating the invention, it is also important to note that cable 34 is under a continuous tension that in a typical embodiment is provided by a tensioning spring of the derailleur (not shown).

In a hand-rotatable gear shifter 20 of the kind which advantageously incorporates the invention, the rotation of the grip 28 causes the cable 34 to be pulled up or let out around a spool or cam which is disposed in the housing 26. This may be accomplished in any of several ways which are peripheral to the invention described herein; examples may be found in commonly assigned U.S. Patents Nos. 5,197,927 and 5,102.372.

The grip of the invention has application to any hand-rotatable gear shifter. Such gear shifters typically are indexed to a plurality of predetermined positions by spring-loaded detents that are tactilely experienced by the rider; in order to shift from one gear to the next, the rider rotates the grip from one detent to the next. To hold the cable against the tensioning force of the derailleur spring, the shifter is designed to require a certain minimum but substantial amount of torque to escape a particular detent in the cable releasing direction and be rotated to the next detent. Escaping a detent in the cable -- pulling direction is made easier by design, to compensate for the fact that the rider is rotating against the force of the derailleur spring; the overall resistance is roughly comparable.

The invention could also have application to a friction-type gear shifter in which there are no preselected detents. A considerable amount of torque would have to be applied to the grip 28 in order to properly actuate such a shifter in the cable pulling direction. The gear shifter internal rotational friction would have to be at least equal to the amount of force exerted by the derailleur tensioning spring, and the torque necessary to rotate the shifter in a cable-pulling direction would have to exceed this.

Either the friction or the detent type of shifter requires the shifter to exhibit a predetermined amount of resistance to torque before it begins turning in a cable-releasing direction. Absent such a minimum predetermined amount of torque, the bicycle would not stay in the desired gear.

Under either scheme, therefore, the amount of frictional force which a rider's hand can apply to the grip 28, and the amount of torque which can be developed on the grip 28 with respect to the mandrel (not shown) on which grip 28 is mounted, should be maximized.

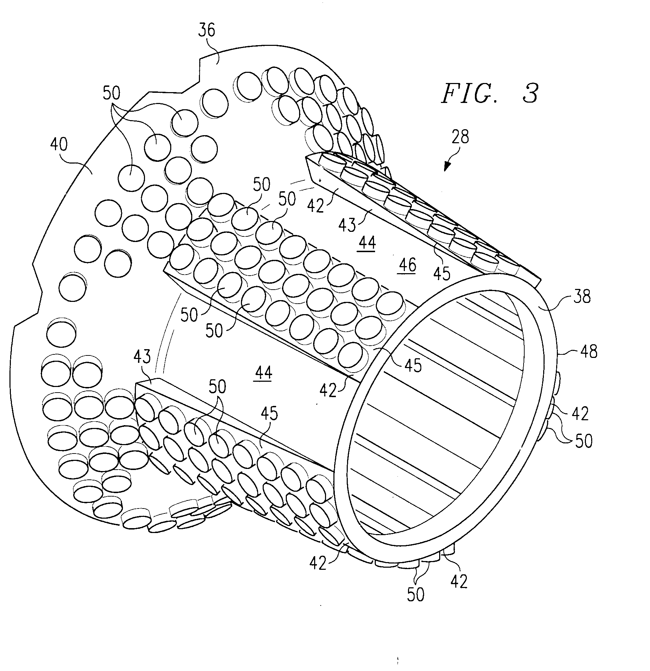

FIGURE 3 is a detailed isometric view of a first embodiment of the grip 28 according to the invention. It is preferred that an exterior surface 36 of the grip 28 be formed of an elastomeric material for comfort to the rider's hand and for certain torque optimizing characteristics. One particularly preferred material is KRATON®, a thermoplastic elastomer manufactured by Shell. The grip 28 is designed to be stretch-fitted over a rigid cylindrical member (not shown) which in turn rotates with respect to the mandrel (not shown) that is fixed in place with respect to the bicycle handlebar 22.

In the embodiment illustrated in FIGURE 3, the grip 28 has two portions: a substantially cylindrical (and preferably slightly tapered) portion 38 and a second portion or flange 40 which is integrally formed with the first portion 38. The cylindrical portion 38 has formed thereon a plurality of longitudinally extending ribs 42 that are angularly spaced apart from one another by a like plurality of valley regions 44. The valley regions 44 extend throughout the length of the generally cylindrical portion 38, and extend into the second flanged portion 40. It is preferred that the number of ribs 42 be between four and six inclusive and more preferably five. Each of the ribs 42 has sidewalls 43 which project radially outwardly from a general surface 46 of the cylindrical portion 38 to an end or outer surface 45 of the rib 42. As measured from the axis of rotation, the outer or end surfaces 45 of the ribs 42 may be at a radius in the range of 0.5 to 0.9 inches. The surface 46 may be slightly tapered, as shown. In the illustrated embodiment, the amount of radial outward projection of each rib 42 varies linearly as a function of the distance from an outboard end 48 of the cylindrical portion 38. It is further preferred that the angular extent of the valley regions 44 be approximately the same as the angular extent of the ribs 42 which they space apart.

Each of the ribs 42 has formed on its outer or end surface 45 thereof a population or array of upstanding features or nubs 50. The ribs 42 act to radially elevate the nubs 50, such that the torque transmitted to the grip 28 is a function of the sum of the radius of the outer surface 45 of the ribs 42 plus the height of the nubs 50.

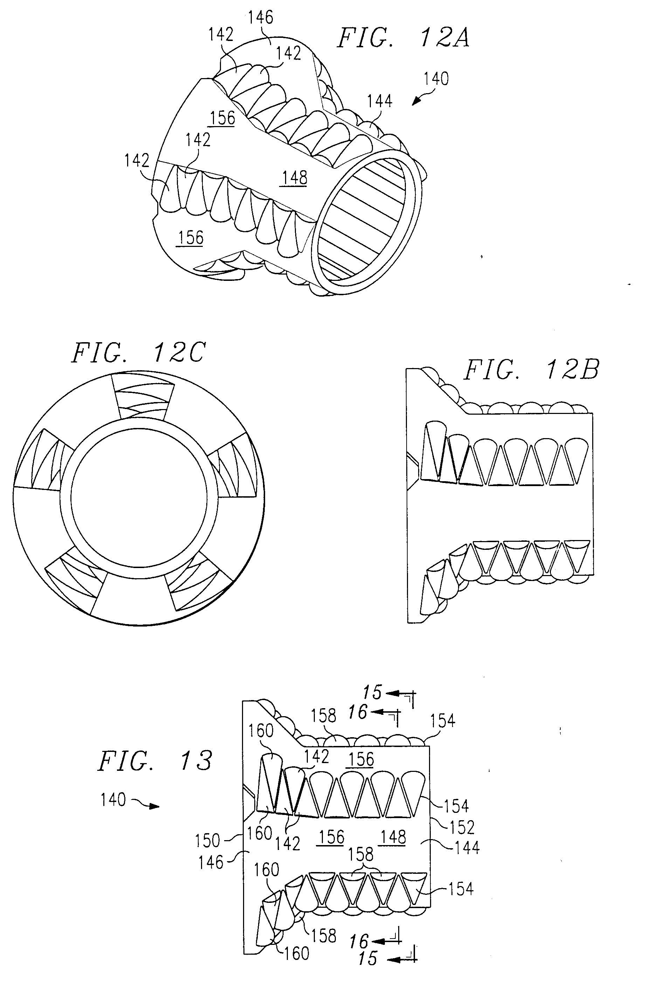

The ribs 42 and the upstanding features 50 are formed of an elastomeric material, and conveniently are integrally formed from the same elastomeric material forming the rest of the grip 28. The features 50 are preferably formed in a two-dimensional matrix, with both dimensions being tangential to the generally cylindrical surface 46. The width and the spacing of the features 50 are chosen such that the distance between each of the features 50 is less than or equal to the width of any one feature 50. This maximizes the number of traction or abutting edges that are available to the hand for torque transmission, with each feature 50 presenting at least one upstanding traction edge to the hand. In the embodiment illustrated in FIGURES 1-5, the features 50 take the form of relatively squat cylinders having a height which is less than or equal to their width. Other upstanding features could also be employed, as will for example be described in conjunction with FIGURES 12-16. The nubs 50 may, for example, have a diameter in the range of 0.05 to 0.2 inches inclusive.

As using the squat cylindrical nubs illustrated in FIGURE 3, for example, the operating surface for grip 28 is preferred to have the following dimensions (given in inches):

| | |
|---|---|
| Rib length: | 1.1 -1.3 |
| Rib width at the top: | 0.36 - 0.38 |
| Rib width at the bottom: | 0.38 - 0.4 |
| Rib height: | 0.040 - 0.050 |
| Space between ribs: | 0.41 - 0.43 |
| Nub diameter: | 0.100 |
| Nub spacing between centers: | 0.11 - 0.130 |
| Nub height: | 0.040 - 0.050 |

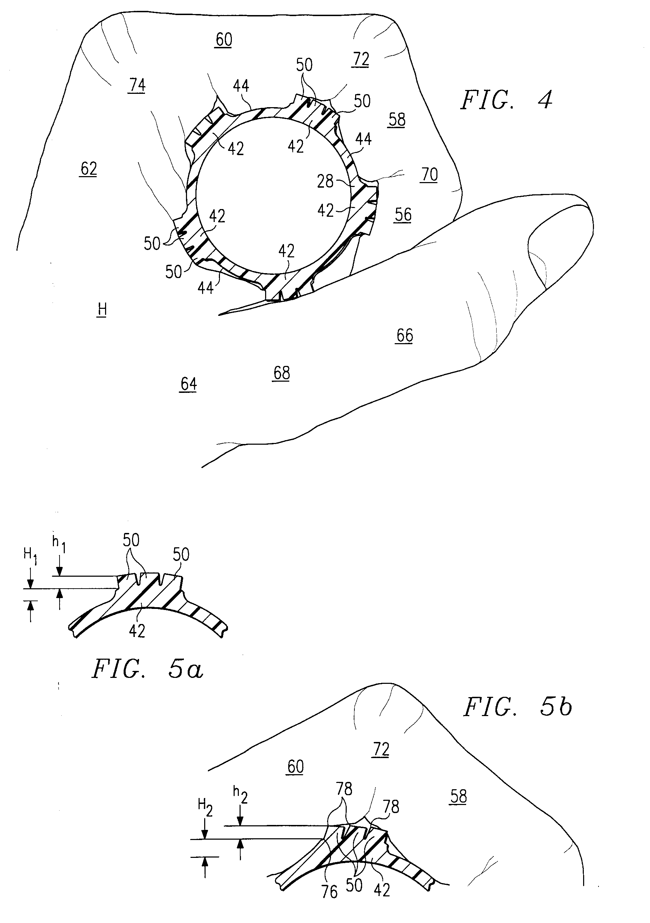

As installed on a bicycle, the flange portion 40 is disposed adjacent the housing 26, as is shown in FIGURE 1. The grip 28 of the invention takes advantage of the enlarged diameter of the housing 26 by providing nubs 50 on the flange 40 as well as on the cylindrical portion 38. The nubs 50 will engage additional surfaces of the thumb and forefinger of the hand of the rider and will increase the amount of frictional force experienced by the rider. Because the side surface of the hand which engages flange portion 40 has no substantial crooks or lands (described in conjunction with FIGURE 4), the nubs 50 on portion 40 include at least one continuous circumferential ring of nubs. The flange portion 40 in general can conform to any of several surfaces of rotation, including a frustoconical surface. The profile of flange 40 should vary smoothly between the inboard end of grip 28 and its junction with portion 38. By applying an axial inboard force against the nubs 50 on flange portion 40 with his or her hand, the rider is able to develop additional friction between the flange 40 and the hand. The nubbed flange 40 therefore allows the transmission of additional torque to the grip 28.

FIGURE 4 illustrates the ergonomic arrangement which obtains when the hand of a rider engages the grip 28. As grasping the grip 28, the hand H forms several crooks and lands which may be taken advantage of by the grip of the invention. The rider is thereby able to exert an additional degree of torque: the advantage obtained may be compared with the advantage obtained by providing a wrench for a hexagonal nut. The bones of the forefinger of the hand H include a distal phalanx 56, a middle phalanx 58, a proximal phalanx 60 and a metacarpal 62. Similar bones (and the softer tissues surrounding them) of the middle and sometimes even the fourth finger (neither shown) will also grasp cylindrical section 38 of the grip. Engaging bones of the thumb include the metacarpal 64 and the proximal phalanx 66. A phalango-metacarpal joint 68 occurs between the proximal phalanx and the metacarpal of the thumb. In like manner, joints 70, 72 and 74 are formed, respectively, between the distal and the middle phalanges of the forefinger, the middle and proximal phalanges of the forefinger, and the proximal phalanx and the metacarpal of the forefinger.

The bone structure of the human hand, as bent in position around the grip 28, forms several natural crooks which correspond to each of the foregoing joints. In between these crooks are flats or lands which provide the gripping surface of the hand when grasping a cylindrical object. It has been discovered that providing five ribs 42 and preselecting a grip diameter to be of a certain size allows an approximate fit of each of the ribs 42 to a respective joint 70, 72, 74 or 68. The valley regions 44 in between the ribs 42 then form natural surfaces for the engagement of the lands or contact surfaces of the hand in between these crooks. This arrangement maximizes the amount of torque which a rider may apply to the shifter grip 28 before slipping occurs.

The provision of an elastomeric material to form the surface of the grip 28 also has the following torque-enhancing advantage best illustrated in the schematic detail shown in FIGURES 5a and 5b. FIGURE 5a shows a rib 42 and nubs 50, in an unstressed condition during which the height of the ribs 42 will be H₁ and the height of the nubs 50 will be h₁. When the hand of the rider applies torque to the rib 42 and the nubs 50, both the rib 42 and the nubs 50 will begin to deform. As illustrated in FIGURE 5b, a leading edge 76 of the rib 42 will begin to be raised, as will leading edges 78 of the nubs 50. This in turn will cause increases in the heights of the rib and nubs to H₂ and h₂ in comparison with the unstressed heights H1 and h₁. The increased height will produce even greater torque since the torque is directly related to the radius at which the force is applied from the axis of rotation.

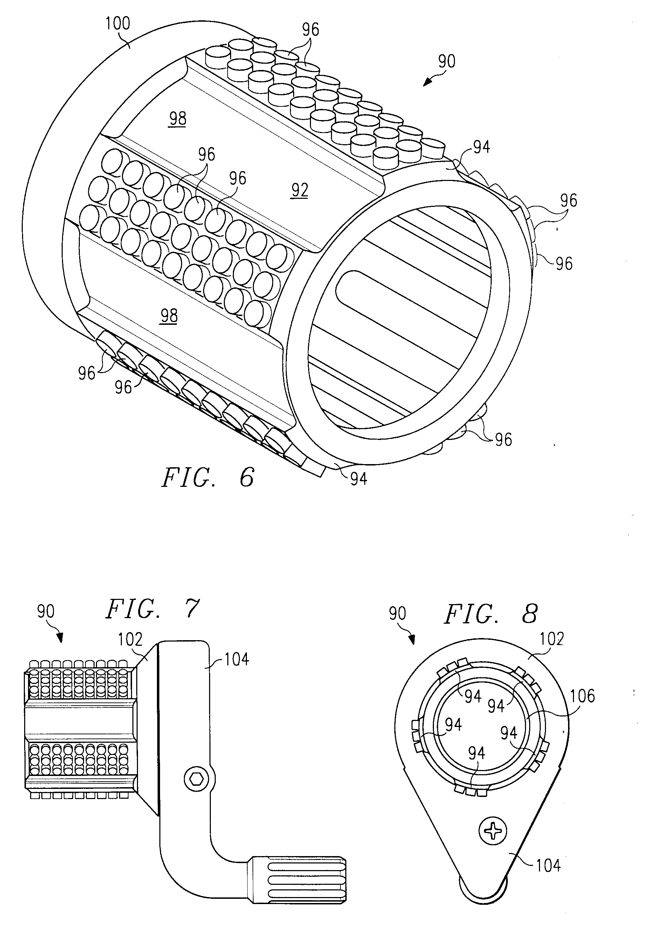

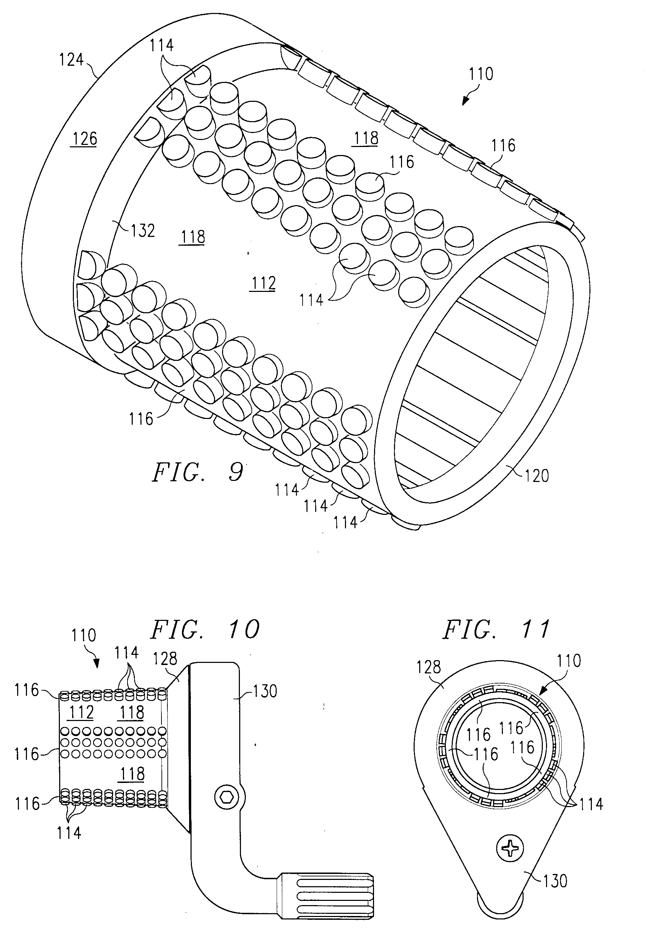

A second embodiment of a grip according to the invention is illustrated at 90 in FIGURES 6-8. In this embodiment, the gripping surface is generally cylindrical in shape (or slightly frustoconical) throughout its length. Upstanding from the general cylindrical surface 92 are five ribs 94, each of which has on an outer surface thereof a matrix of upstanding elastomeric nubs 96. The ribs 94 are separated by valley regions 98, as before. The height of the ribs 94 with respect to the generally cylindrical surface 92 remains substantially constant throughout the length of the grip, although ribs 94 may taper slightly between the inboard and outboard ends. Ribs 94 and the generally cylindrical surface 92 terminate in a flange 100 which is received underneath a flange 102 of a housing 104 (FIGURE 7). As before, the grip 90 is carried on a rotating member 106 (FIGURE 8) which in turn rotates on a mandrel (not shown) that is fixed with respect to the bicycle handlebar.

FIGURES 9-11 illustrate yet another embodiment of the invention. In this embodiment. a grip indicated generally at 110 has a generally cylindrical surface 112 (which may be slightly frustoconical or tapered) throughout its gripping length. A plurality of nubs 114 are arranged in five zones, matrices or groups 116 spaced equidistantly around the circumference of the grip 110. Unlike the prior embodiments, however, the nubs 114 are not mounted on ribs but instead are formed directly on the generally cylindrical surface 112. Five valley regions 118, on which no nubs 114 are formed, angularly space apart the nub groups 116.

On grip 110, the nubs 114 have a relatively small height near the outboard end 120 of the grip 110 and a relatively large height nearest the inboard end 124. The grip 110 terminates in an inboard flange 126 which (FIGURES 10 and 11) fits underneath a housing flange 128 of the gear shifter assembly 130. An intermediate frustoconical flange 132 joins the generally cylindrical surface 112 of the grip 110 with the inboard flange 126. A farthest-inboard file or circle of nubs 114 are formed on this intermediate flange 132 as well. In this way, the nubs 114 form a linear transition between the flange 126 and the cylindrical surface of the outboard handlebar grip 32 (see FIGURE 1).

FIGURES 12, 13 and 14 are isometric, elevational and end views of a grip indicated generally at 140 having a plurality of nubs or features 142 which are decidedly other than cylindrical in shape. The grip 140 takes the general shape of grip 28 (see FIGURES 1-3) in that it has a substantially cylindrical outboard portion 144 and a flanged inboard portion 146. The cylindrical portion 144 has a generally cylindrical surface 148 from which the triangularly-shaped nubs or "shark's teeth" radially outwardly extend. The flange 146 serves as a transition region between the generally cylindrical surface 148 and an inboard end 150 of the grip 140, which has a radius that is substantially larger than the outboard end 152 and which matches the radius of housing 26 (see FIGURE 1). The transitional surface 146 may be any of several surfaces of rotation, but conveniently may be substantially frustoconical as shown.

As in the other embodiments, the nubs 142 are arranged in longitudinal groups or zones 154 which are formed both on the cylindrical portion 144 and the flanged portion 146 of the grip 140. The groups 154 are angularly spaced apart from each other by valley regions 156. There should be from four to six longitudinal groups 154. Where, as preferred, five longitudinal groups 154 are chosen as spaced by five valley regions 156, an ergonomic relationship to the rider's hand is obtained which is similar to that shown in FIGURE 4. In the illustrated embodiment, each of the nub groups 154 is a one-dimensional array.

As seen from above (see FIGURE 13), each of the nubs 142 is approximately triangular in shape. Each of the nubs 142 has a leading face 158 which is formed at a substantial angle to the general cylindrical surface 148 of the grip 140. Preferably, the leading face 158 is formed to be perpendicular to the general cylindrical surface 148. Each nub or shark tooth 142 also has a trailing surface or face 160 which gradually slopes from its juncture with a leading face 158 downward to the same radial elevation as the general cylindrical surface 148. In the illustrated embodiment, the trailing face 160 is curved both in a plane including the axis of rotation and in a plane perpendicular thereto, and the leading face 158 and the trailing surface or face 160 form the entire exterior surface of each nub 142. According to other designs which are within the scope of the invention, the trailing surface 160 may consist of several faces or surfaces.

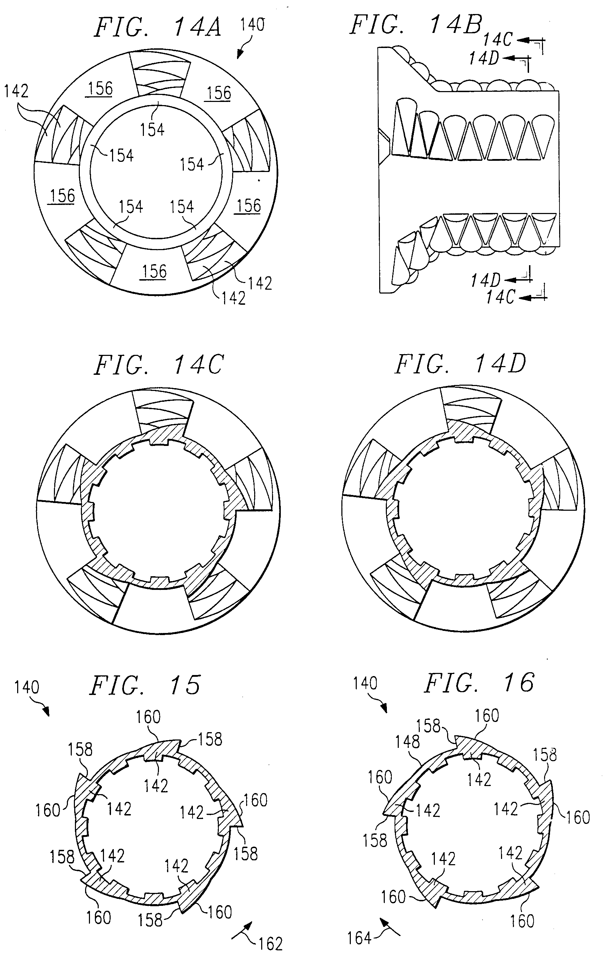

The triangular shape of each of the nubs 142 in the preferred embodiment allows a closest-packing arrangement in which a first set of the nubs 142 in each of the groups 154 have leading faces 158 which face a first direction, while an interleaved second set of the nubs 142 have leading faces 158 which face in a second direction opposite the first direction. This is best illustrated in the sectional views shown in FIGURES 15 and 16. In FIGURE 15, a section has been taken through each of five nubs 142. which are members of respective groups 154. The leading faces 158 of the sectioned nubs 142 all face against a counterclockwise rotational direction, indicated by the arrow 162. When engaged by the hand of the rider. the various upstanding faces 158 will provide stops against which various skin surfaces of the hand will abut when the hand of the rider rotates the grip 140 in the counterclockwise direction 162. The trailing faces 160 and the material underneath them provide an enhanced resistance to circumferential deformation of the nub or shark tooth 142. The sectioned features 142 will therefore be able to transmit more torque to the grip 140 in general and from there to the underlying rotating member (not shown).

In FIGURE 16 a radial section has been taken through an adjacent set of shark's teeth 142. These adjacent shark's teeth 142 have leading, upstanding faces 158 which face against a clockwise direction, which is indicated by arrow 164. When a rider's hand rotates the grip 140 in a clockwise direction, various surfaces of his or her hand will abut the leading faces 158 of these nubs 142, allowing for an effective transmission of torque to the grip 140 and ultimately to the underlying rotating member (not shown). Thus, a combination of shark's teeth having leading faces facing one direction, and shark's teeth having leading faces facing another direction, provide useful abutting surfaces against which a hand may apply torque regardless of the direction of rotation. The ramped nature of the "shark's teeth" 142 further assures that these features will not unduly deform but will instead straightforwardly transmit torque to the grip and to the underlying rotational member.

It is also possible to have a series of ramped features with leading edges that are not generally triangular in shape. For example, each of the zones or groups 154 could be populated with rectangular-shaped ramped features. Triangular-shaped shark's teeth 142 are preferred. however, because the largest amount of surface area of the leading faces 158 may be provided per unit of length of the grip 140.

While the embodiment shown in FIGURES 12-16 thus provides a plurality of abutting surfaces which advantageously transmit torque, the features 142 nonetheless allow mud, grit and other fouling matter to slide off into the regions in between the nubs 142, thus permitting a degree of retention of frictional force which is necessary to rotate the grip 140.

In summary, novel grips for hand-rotatable bicycle gear shifters have been disclosed and illustrated which provide nubbed surfaces for good retention of torque transmission under adverse environmental conditions, and which optimize the transmission of torque by being ergonomically fitted to a rider's hand. While preferred embodiments and their advantages have been described in the above detailed description, the invention is not limited thereto but only by the scope of the appended claims.

## Claims

1. A hand-rotatable bicycle gear shifter (20), comprising:
a body (28,90,110,140) formed around an axis, having two axially spaced ends, and having a first portion (38,92,112,144) with a generally cylindrical exterior first surface (46) formed at a first radius from said axis; and
a plurality of upstanding elastomeric nubs (50,96,114,142) formed on at least said first portion (38,92,112,144) and to be arranged in longitudinally elongated groups; characterised in that
said groups of nubs (50,96,114,142) are spaced apart from each other by longitudinally elongated valley regions (44,98,118,156) on said first surface (46), said valley regions (44,98,118,156) adaptable to fit respective flats of a rider's hand (H), at least three angularly adjacent groups of said nubs (50,96,114,142) adaptable to fit respective crooks of the rider's hand (H) to better transmit torque to the gear shifter.

2. The shifter of Claim 1, wherein said first portion of said surface has from four to six longitudinal valley regions (44,98,118,156), inclusive.

3. The shifter of Claim 1, wherein an angular extent of each valley region (44,98,118,156) is substantially the same as an angular extent of at least one adjacent group of nubs (50,96,114,142).

4. The shifter of Claim 1 or Claim 16, wherein each of said nubs (50,96,114,142) has a diameter, each said nub being spaced apart from adjacent ones of said nubs in the same group by a distance which is less than said diameter.

5. The shifter of Claim 1, and further comprising a plurality of longitudinally elongated ribs (42,94) separated from each other by said valley regions (44,98), said ribs (42,94) having end surfaces (45) formed at a second radius from said axis which is greater than said first radius, said groups of nubs (50,96) formed on respective ones of said end surfaces (45).

6. A hand-rotatable bicycle gear shifter (20), comprising:
a body (28) formed around an axis, having two axially spaced ends, and having a first portion (38) with a generally cylindrical exterior surface (46) formed at a first radius from said axis;
a plurality of longitudinally elongated ribs (42) formed on at least said first portion (38) to be separated from each other by valley regions (44), said valley regions (44) having a surface at said first radius from said axis, said ribs (42) having end surfaces (45) formed at a second radius from said axis which is greater than said first radius;
a plurality of upstanding elastomeric nubs (50) formed on at least said first portion (38) to extend radially outwardly and to be arranged in longitudinally elongated groups; and
a second portion (40) of said body disposed between said first portion (38) and one of said ends, an exterior surface of said second portion (40) facing said first portion (38) and having a radius at said one of said ends which is substantially greater than said first radius, characterised in that
said groups of nubs (50) are formed on respective ones of said end surfaces (45) of said ribs (42) and not in said valley regions (44), said valley regions (44) adaptable to fit respective flats of a rider's hand, a second plurality of nubs (50) being disposed on said exterior surface of said second portion (40).

7. The shifter of Claim 6, wherein at least one ring of nubs (50) are circumferentially distributed on said exterior surface of said second portion (40) of said body (28).

8. The shifter of Claim 6, wherein said second portion (40) of said body (28) has valley regions (44) on which there are no nubs (50).

9. A hand-rotatable bicycle gear shifter, comprising:
a grip (28,90) rotatable around an axis of said shifter and having a first portion (38,92) with a generally cylindrical exterior surface (46);
a plurality of upstanding elongated ribs (42,94) formed on said first surface (46) to be parallel to said axis and to be spaced from each other, characterised in that
the radial distance of said ribs (42,94) from said axis and an angular spacing of said ribs (42,94) is preselected such that, when gripped by the hand (H) of a rider:
a first of said ribs (42,94) is disposed adjacent the joint (70) between the distal phalanx (56) and the middle phalanx (58) of the forefinger of said hand;
a second of said ribs (42,94) angularly next adjacent the first of said ribs (42,94) is disposed adjacent the joint (72) between the middle phalanx (58) and the proximal phalanx (60) of the forefinger of said hand; and
a third of said ribs (42,94) angularly next adjacent the second of said ribs (42,94) is disposed adjacent the joint (74) between the proximal phalanx (60) and the metacarpel (62) of the forefinger of the rider's hand.

10. The gear shifter of Claim 9, wherein said ribs (42,94) further include a fourth of said ribs (42,94) disposed adjacent the joint (68) between the proximal phalanx (66) and the metacarpal (64) of the thumb of the rider's hand.

11. The gear shifter of Claim 10, wherein said fourth of said ribs (42,94) is next adjacent to the first of said ribs (42,94).

12. The shifter of Claim 11, wherein there are five of said ribs (42,94).

13. The shifter of Claim 9, wherein each of said ribs (42,94) has formed on the outer surface thereof a plurality of upstanding elastomeric nubs (50,96).

14. The shifter of Claim 13, wherein said ribs (42,94) define valley regions (44,98) therebetween, no nubs (50,96) being formed in said valley regions (44,98).

15. A grip for a hand-rotatable bicycle gear shifter, comprising a rotatable member (146), an exterior surface (148) of said rotatable member (146) generally formed as a solid of rotation; and
a plurality of axially elongated zones (154) of said exterior surface (148), each zone (154) having a plurality of features (142) radially upstanding from said exterior surface, characterised in that
said zones (154) are angularly spaced from each other;
each feature (142) has a leading face (158) making a relatively sharp angle to said exterior surface (148) and at least one trailing face (160) bordering on said leading face (158) and making a relatively small angle to said exterior surface (148); and
at least first and second groups of said features (142), leading faces (158) of said first group of features facing a first direction of rotation, leading faces (158) of said second group of features facing a second direction of rotation, such that the hand of the rider will transmit torque to the rotating member (146) through the first group of features (142) when rotating the rotating member in said first direction, and such that the hand of the rider will transmit torque to the rotating member (146) through the second group of features (142) when rotating the rotating member in the second direction.

16. The grip of Claim 15, wherein said features (142) are elastomeric.

17. The grip of Claim 15, wherein each zone (154) includes ones of said first group of features (142) and ones of said second group of features (142).

18. The grip of Claim 15, wherein one of said first group of features (142) are interleaved with ones of said second group of features (142).

19. The grip of Claim 15, wherein said features (142) are triangular in shape.

20. The grip of Claim 15, wherein each said trailing face (160) is curved in a plane perpendicular to the axis of rotation.

21. The grip of Claim 15, wherein each said trailing face (160) is curved in a plane which includes the axis of rotation.

22. The grip of Claim 15, wherein each zone (154) has a one-dimensional array of alternating first and second features (142), said array being axially elongated.

## Patentansprüche

1. Von Hand drehbare Fahrradgangschaltung (20), die folgendes umfaßt:
- einen um eine Achse ausgebildeten Körper (28, 90, 110, 140) mit zwei im axialen Abstand angeordneten Enden, der einen ersten Abschnitt (38, 92, 112, 144) mit einer ersten weitgehend zylindrischen Außenseite (46) aufweist, welche in einem ersten Radius gegenüber dieser Achse ausgebildet ist; und
- eine Anzahl von hochstehenden Gumminoppen (50, 96, 114, 142), welche mindestens auf diesem ersten Abschnitt (38, 92, 112, 144) ausgebildet und in Längsgruppen angeordnet sind,
**dadurch gekennzeichnet**, **daß**
diese Gruppen von Noppen (50, 96, 114, 142) mit Hilfe von länglichen Vertiefungen (44, 98, 118, 156) auf der ersten Außenseite (46) voneinander getrennt sind, wobei diese Vertiefungen (44, 98, 118, 156) so ausgebildet sind, daß sie sich an die Handfläche (H) eines Fahrers anpassen können, und daß sich mindestens drei im Winkelabstand benachbarte Gruppen dieser Noppen (50, 96, 114, 142) in die Krümmungen der Hand (H) des Fahrers einpassen, um das Drehmoment besser auf die Fahrradgangschaltung zu übertragen.

2. Fahrradgangschaltung nach Anspruch 1,
**dadurch gekennzeichnet**, **daß**
der erste Abschnitt dieser Oberfläche zwischen vier bis sechs längliche Vertiefungen (44, 98, 118, 156) aufweist.

3. Fahrradgangschaltung nach Anspruch 1,
**dadurch gekennzeichnet**, **daß**
der winklige Verlauf der einzelnen Vertiefungen (44, 98, 118, 156) weitgehend der gleiche ist, wie der winklige Verlauf von mindestens einer der benachbarten Gruppen von Noppen (50, 96, 114, 142).

4. Fahrradgangschaltung nach Anspruch 1 oder Anspruch 16,
**dadurch gekennzeichnet, daß**
jede der Noppen (50, 96, 114, 142) einen bestimmten Durchmesser hat, und daß jede der Noppen von der benachbarten Noppe der gleichen Gruppe in einem Abstand liegt, der kleiner ist, als dieser Durchmesser.

5. Fahrradgangschaltung nach Anspruch 1,
**dadurch gekennzeichnet**, **daß**
sie eine Anzahl von länglichen Rippen (42, 94) aufweist, welche durch diese Vertiefungen (44, 98) voneinander getrennt sind, und daß diese Rippen (42, 94) Endflächen (45) aufweisen, die in einem zweiten Radius zu dieser Achse ausgebildet sind, der größer ist, als der erste Radius, und daß diese Gruppen von Noppen (50, 96) auf den jeweiligen Endflächen (45) ausgebildet sind.

6. Von Hand drehbare Fahrradgangschaltung (20), die folgendes aufweist.
- einen um eine Achse verlaufenden Körper (28) mit zwei im axialen Abstand angeordneten Enden, und der einen ersten Abschnitt (38) mit einer weitgehend zylindrischen Außenfläche (46) aufweist, die in einem ersten Radius zu dieser Achse angeordnet ist;
- eine Anzahl von länglichen Rippen (42), die mindestens auf diesem ersten Abschnitt (38) so ausgebildet sind, daß sie durch Vertiefungen (44) voneinander getrennt sind, wobei diese Vertiefungen (44) in diesem ersten Radius gegenüber dieser Achse eine Oberfläche aufweisen, und diese Rippen Endflächen (45) besitzen, die in einem zweiten Radius gegenüber dieser Achse ausgebildet sind, der größer ist, als der erste Radius;
- eine Anzahl von nach oben stehenden Gumminoppen (50), die mindestens auf diesem ersten Abschnitt (38) so ausgebildet sind, daß sie radial nach außen verlaufen und in Längsgruppen angeordnet sind; und
- ein zweiter Abschnitt (40) dieses Körpers zwischen diesem ersten Abschnitt (38) und einem dieser Enden angeordnet ist, wobei eine Außenfläche dieses zweiten Abschnitts (40) dem ersten Abschnitt (38) gegenüberliegt und einen Radius an einem dieser Enden hat, welcher deutlich größer ist, als der erste Radius,
**dadurch gekennzeichnet**, **daß**
diese Gruppen von Noppen (50) jeweils an den Endflächen (45) der Rippen (42) und nicht in den Vertiefungen (44) ausgebildet sind, wobei diese Vertiefungen (44) so ausgebildet sind, daß sie sich in die Handfläche des Fahrers einpassen, und daß eine zweite Anzahl von Noppen (50) auf der Außenseite des zweiten Abschnittes (40) angeordnet ist.

7. Fahrradgangschaltung nach Anspruch 6,
**dadurch gekennzeichnet, daß**
mindestens ein Ring von Noppen (50) über den Umfang der Außenseite des zweiten Abschnittes (40) des Körpers (28) verteilt angeordnet ist.

8. Fahrradgangschaltung nach Anspruch 6,
**dadurch gekennzeichnet**, **daß**
der zweite Abschnitt (40) des Körpers (28) Vertiefungen (44) aufweist, in denen keine Noppen (50) vorgesehen sind.

9. Von Hand drehbare Fahrradgangschaltung, die folgendes aufweist:
- einen um eine Achse der Fahrradgangschaltung verlaufenden Griff (28, 90) mit einem ersten Abschnitt (38, 92) mit einer weitgehend zylindrischen Außenfläche (46);
- eine Anzahl von nach oben hervorstehenden länglichen Rippen (42, 94), die parallel zu dieser Achse auf dieser ersten Oberfläche (46) im Abstand voneinander angeordnet sind,
**dadurch gekennzeichnet**, **daß**
der radiale Abstand der Rippen (42, 94) zu dieser Achse und der Winkelabstand dieser Rippen (42, 94) so gewählt werden, daß sie, wenn sie von der Hand (H) eines Fahrers ergriffen werden:
eine erste dieser Rippen (42, 94) an der Verbindung (70) zwischen dem hinteren Glied (56) und dem mittleren Glied (58) des Zeigefingers der Hand des Fahrers liegt;
eine zweite dieser Rippen (42, 94), die im Winkelabstand der ersten Rippe (42, 94) am nächsten liegt, an der Verbindung (72) zwischen dem mittleren Glied (58) und dem vorderen Glied (60) des Zeigefingers angeordnet ist; und
eine dritte dieser Rippen (42, 94), die im Winkelabstand der zweiten Rippe (42, 96) am nächsten kommt, an der Verbindung (74) zwischen dem vorderen Glied (60) und der Wurzel (62) des Zeigefingers der Hand des Fahrers angeordnet ist.

10. Fahrradgangschaltung nach Anspruch 9,
**dadurch gekennzeichnet, daß**
die Gruppe von Rippen (42, 94) noch eine vierte Rippe (42, 94) aufweist, die an der Verbindung (68) zwischen dem vorderen Glied (66) und der Wurzel (64) des Daumens der Hand des Fahrers angeordnet ist.

11. Fahrradgangschaltung nach Anspruch 10,
**dadurch gekennzeichnet, daß**
die vierte dieser Rippen (42, 94) in unmittelbarer Nachbarschaft der ersten Rippe (42, 94) angeordnet ist.

12. Fahrradgangschaltung nach Anspruch 11,
**dadurch gekennzeichnet**, **daß**
insgesamt fünf Rippen (42, 94) vorgesehen sind.

13. Fahrradgangschaltung nach Anspruch 9,
**dadurch gekennzeichnet**, **daß**
jede der Rippen (42, 94) an ihrer Außenseite eine Anzahl von hervorstehenden Gumminoppen (50, 96) aufweist.

14. Fahrradgangschaltung nach Anspruch 13,
**dadurch gekennzeichnet**, **daß**
zwischen den Rippen (42, 94) Vertiefungen (44, 98) vorgesehen sind, wobei in diesen Vertiefungen (44, 98) keine Noppen (50, 96) angeordnet sind.

15. Griff für eine von Hand drehbare Fahrradgangschaltung mit einem drehbaren Element (146), bei dem eine Außenfläche (148) dieses drehbaren Elementes (146) insgesamt als fester Rotationskörper ausgebildet ist; und mit einer Anzahl von in axialer Richtung verlaufenden länglichen Bereichen (154) auf dieser Außenfläche (148), wobei jeder dieser Bereiche eine Anzahl von Ansätzen (142) aufweist, die in radialer Richtung aus dieser Außenfläche hervorstehen,
**dadurch gekennzeichnet**, **daß**
jeder dieser Bereiche (154) im Winkelabstand zueinander angeordnet ist; jeder der Ansätze (142) eine Vorderkante (158) aufweist, die einen relativ spitzen Winkel gegenüber der Außenfläche (148) bildet, sowie mindestens eine Auslaßkante (160) aufweist, welche an diese Vorderkante (158) angrenzt und einen relativ stumpfen Winkel gegenüber dieser Außenseite bildet; und
in mindestens einer ersten und zweiten Gruppe dieser Ansätze (142) die Vorderkanten (158) der ersten Gruppe von Ansätzen in eine erste Drehrichtung zeigen, während die Vorderkanten (158) der zweiten Gruppe von Ansätzen in eine zweite Drehrichtung zeigen, so daß die Hand des Fahrers mittels der ersten Gruppe von Ansätzen (142) ein Drehmoment auf das Rotationselement (146) überträgt, wenn das Rotationselement in diese erste Richtung gedreht wird, und daß die Hand des Fahrers mittels der zweiten Gruppe von Ansätzen (142) ein Drehmoment auf das Rotationselement (146) überträgt, wenn dieses Rotationselement in die zweite Richtung gedreht wird.

16. Griff nach Anspruch 15,
**dadurch gekennzeichnet, daß**
die Ansätze (142) aus einem Elastomer hergestellt sind.

17. Griff nach Anspruch 15,
**dadurch gekennzeichnet**, **daß**
jeder der Bereiche (154) eine gewisse Anzahl der ersten Gruppe von Ansätzen (142) und eine gewisse Anzahl der zweiten Gruppe von Ansätzen (142) umfaßt.

18. Griff nach Anspruch 15,
**dadurch gekennzeichnet**, **daß**
ein Teil der ersten Gruppe von Ansätzen (142) eine gewisse Anzahl von Teilen der zweiten Gruppe von Ansätzen (142) überlappt.

19. Griff nach Anspruch 15, **dadurch gekennzeichnet**, **daß**
die Ansätze (142) eine dreieckige Form haben.

20. Griff nach Anspruch 15,
**dadurch gekennzeichnet**, **daß**
jede der hinteren Kanten (160) in einer Ebene gekrümmt ist, die rechtwinklig zu der Rotationsachse verläuft.

21. Griff nach Anspruch 15,
**dadurch gekennzeichnet, daß**
jede der hinteren Kanten (160) in einer Ebene gekrümmt ist, welche die Rotationsachse einschließt.

22. Griff nach Anspruch 15,
**dadurch gekennzeichnet**, **daß**
jeder der Bereiche eine eindimensionale Anordnung von wechselnden ersten und zweiten Ansätzen (142) aufweist, wobei diese Anordnung in axialer Längsrichtung verläuft.

## Revendications

1. Dispositif de changement de vitesse de bicyclette pouvant être tourné à la main (20), comprenant :
un corps (28, 90, 110, 140) formé autour d'un axe, comportant deux extrémités espacées suivant l'axe, et comportant une première partie (38, 92, 112, 144) présentant une première surface extérieure sensiblement cylindrique (46) formée au niveau d'un premier rayon à partir dudit axe, et
une pluralité de tétons élastomères dressés (50, 96, 114, 142) formés sur au moins ladite première partie (38, 92, 112, 144) et agencés en groupes allongés longitudinalement, caractérisé en ce que
lesdits groupes de tétons (50, 96, 114, 142) sont espacés les uns des autres par des régions en creux allongées longitudinalement (44, 98, 118, 156) sur ladite première surface (46), lesdites régions en creux (44, 98, 118, 156) étant conçues pour s'adapter aux méplats respectifs de la main d'un cycliste (H), au moins trois groupes adjacents selon un angle desdits tétons (50, 96, 114, 142) étant conçus pour s'adapter aux pliures respectives de la main d'un cycliste (H) afin de mieux transmettre un couple au dispositif de changement de vitesse.

2. Dispositif de changement de vitesse selon la revendication 1, dans lequel ladite première partie de ladite surface comporte depuis quatre jusqu'à six régions en creux longitudinales (44, 98, 118, 156), inclusivement.

3. Dispositif de changement de vitesse selon la revendication 1, dans lequel une étendue selon un angle de chaque région en creux (44, 98, 118, 156) est pratiquement la même qu'une étendue selon un angle d'au moins un groupe adjacent de tétons (50, 96, 114, 142).

4. Dispositif de changement de vitesse selon la revendication 1 ou la revendication 16, dans lequel chacun desdits tétons (50, 96, 114, 142) présente un diamètre, chaque dit téton étant espacé des tétons adjacents parmi lesdits tétons dans le même groupe d'une distance qui est inférieure audit diamètre.

5. Dispositif de changement de vitesse selon la revendication 1, et comprenant en outre une pluralité de nervures allongées longitudinalement (42, 94) séparées l'une de l'autre par lesdites régions en creux (44, 98), lesdites nervures (42, 94) comportant des surfaces d'extrémité (45) formées au niveau d'un second rayon à partir dudit axe qui est supérieur audit premier rayon, lesdits groupes de tétons (50, 96) étant formés sur des surfaces respectives parmi lesdites surfaces d'extrémité (45).

6. Dispositif de changement de vitesse de bicyclette pouvant être tourné à la main (20), comprenant :
un corps (28) formé autour d'un axe, comportant deux extrémités espacées axialement, et comportant une première partie (38) présentant une surface extérieure sensiblement cylindrique (46) formée au niveau d'un premier rayon à partir dudit axe,
une pluralité de nervures allongées longitudinalement (42) formées sur au moins ladite première partie (38) de façon à être séparées l'une de l'autre par des régions en creux (44), lesdites régions en creux (44) présentant une surface au niveau dudit premier rayon à partir dudit axe, lesdites nervures (42) présentant des surfaces d'extrémité (45) formées au niveau d'un second rayon à partir dudit axe qui est supérieur audit premier rayon,
une pluralité de tétons élastomères dressés (50) formés sur au moins ladite première partie (38) de façon à s'étendre radialement vers l'extérieur et qui sont agencés en groupes allongés longitudinalement, et
une seconde partie (40) dudit corps disposée entre ladite première partie (38) et l'une desdites extrémités, une surface extérieure de ladite seconde partie (40) faisant face à ladite première partie (38) et présentant un rayon au niveau d'une desdites extrémités qui est sensiblement supérieur audit premier rayon, caractérisé en ce que
lesdits groupes de tétons (50) sont formés sur des surfaces respectives parmi lesdites surfaces d'extrémité (45) desdites nervures (42) et non pas dans lesdites régions en creux (44), lesdites régions en creux (44) étant conçues pour s'adapter aux méplats respectifs de la main d'un cycliste, une seconde pluralité de tétons (50) étant disposée sur ladite surface extérieure de ladite seconde partie (40).

7. Dispositif de changement de vitesse selon la revendication 6, dans lequel au moins une couronne de tétons (50) est répartie selon la circonférence sur ladite surface extérieure de ladite seconde partie (40) dudit corps (28).

8. Dispositif de changement de vitesse selon la revendication 6, dans lequel ladite seconde partie (40) dudit corps (28) comporte des régions en creux (44) sur lesquelles il n'y a aucun téton (50).

9. Dispositif de changement de vitesse de bicyclette pouvant être tourné à la main, comprenant :
une poignée (28, 90) pouvant être tournée autour d'un axe dudit dispositif de changement de vitesse et comportant une première partie (38, 92) présentant une surface extérieure sensiblement cylindrique (46),
une pluralité de nervures allongées dressées (42, 94) formée sur ladite première surface (46) qui sont parallèles audit axe et qui sont espacées l'une de l'autre, caractérisé en ce que
la distance radiale desdites nervures (42, 94) depuis ledit axe et un espacement angulaire desdites nervures (42, 94) sont présélectionnés de telle sorte que, lorsqu'elles sont saisies par la main (H) d'un cycliste :
une première desdites nervures (42, 94) est disposée à proximité de l'articulation (70) entre la phalange distale (56) et la phalange intermédiaire (58) de l'index de ladite main,
une seconde desdites nervures (42, 94) immédiatement adjacente selon un angle à la première desdites nervures (42, 94) est disposée à proximité de l'articulation (72) entre la phalange intermédiaire (58) et la phalange proximale (60) de l'index de ladite main, et
une troisième desdites nervures (42, 94) immédiatement adjacente selon un angle à la seconde desdites nervures (42, 94) est disposée à proximité de l'articulation (74) entre la phalange proximale (60) et l'os métacarpien (62) de l'index de la main du cycliste.

10. Dispositif de changement de vitesse selon la revendication 9, dans lequel lesdites nervures (42, 94) comprennent en outre une quatrième parmi lesdites nervures (42, 94) disposée à proximité de l'articulation (68) entre la phalange proximale (66) et l'os métacarpien (64) du pouce de la main du cycliste.

11. Dispositif de changement de vitesse selon la revendication 10, dans lequel ladite quatrième parmi lesdites nervures (42, 94) est immédiatement adjacente à la première desdites nervures (42, 94).

12. Dispositif de changement de vitesse selon la revendication 11, dans lequel il existe cinq desdites nervures (42, 94).

13. Dispositif de changement de vitesse selon la revendication 9, dans lequel chacune desdites nervures (42, 94), formée à la surface extérieure de celle-ci, comporte une pluralité de tétons élastomères dressés (50, 96).

14. Dispositif de changement de vitesse selon la revendication 13, dans lequel lesdites nervures (42, 94) définissent des régions en creux (44, 98) entre elles, aucun téton (50, 96) n'étant formé dans lesdites régions en creux (44, 98).

15. Poignée destinée à un dispositif de changement de vitesse de bicyclette pouvant être tourné à la main, comprenant un élément pouvant être tourné (146), une surface extérieure (148) dudit élément pouvant être tourné (146) étant sensiblement réalisée sous forme d'un solide de rotation, et
une pluralité de zones allongées axialement (154) de ladite surface extérieure (148), chaque zone (154) comportant une pluralité d'éléments (142) se dressant radialement depuis ladite surface extérieure, caractérisée en ce que
lesdites zones (154) sont espacées selon un angle l'une par rapport à l'autre,
chaque élément (142) comporte une face avant (156) faisant un angle relativement aigu avec ladite surface extérieure (148) et au moins une face arrière (160) limitrophe de ladite face avant (158) et faisant un angle relativement petit par rapport à ladite surface extérieure (148), et
au moins des premier et second groupes desdits éléments (142), les faces avant (158) dudit premier groupe d'éléments faisant face à un premier sens de rotation, les faces avant (158) dudit second groupe d'éléments faisant face à un second sens de rotation, de sorte que la main du cycliste transmettra un couple à l'élément rotatif (146) par l'intermédiaire du premier groupe d'éléments (142) lors d'une rotation de l'élément tournant dans ledit premier sens, et de sorte que la main du cycliste transmettra un couple à l'élément rotatif (146) par l'intermédiaire du second groupe d'éléments (142) lors de la rotation de l'élément rotatif dans le second sens.

16. Poignée selon la revendication 15, dans laquelle lesdits éléments (142) sont élastomères.

17. Poignée selon la revendication 15, dans laquelle chaque zone (154) comprend des éléments parmi ledit premier groupe d'éléments (142) et des éléments parmi ledit second groupe d'éléments (142).

18. Poignée selon la revendication 15, dans laquelle des éléments dudit premier groupe d'éléments (142) sont imbriqués avec des éléments dudit second groupe d'éléments (142).

19. Poignée selon la revendication 15, dans laquelle lesdits éléments (142) sont de forme triangulaire.

20. Poignée selon la revendication 15, dans laquelle chaque dite face arrière (160) est incurvée dans un plan perpendiculaire à l'axe de rotation.

21. Poignée selon la revendication 15, dans laquelle chaque dite face arrière (160) est incurvée dans un plan qui comprend l'axe de rotation.

22. Poignée selon la revendication 15, dans laquelle chaque zone (154) comporte une configuration à une dimension de premiers et seconds éléments alternés (142), ladite configuration étant allongée axialement.
